# EUROPEAN PATENT SPECIFICATION

(11) **EP 3 015 676 B1**
(45) Date of publication and mention of the grant of the patent: **04.04.2018**
(21) Application number: 14191249.3
(22) Date of filing: 31.10.2014
(51) Int. Cl.: F02B 37/10, F02B 39/04, F02B 39/10, B60K 6/48, F02C 6/12, H02K 7/18

(54) **VEHICLE PROVIDED WITH A TURBO-COMPRESSOR AND METHOD FOR CONTROLLING THE TURBO-COMPRESSOR AND THE INTERNAL COMBUSTION ENGINE OF SUCH A VEHICLE**
Fahrzeug mit einem Turbolader und Verfahren zur Steuerung des Turboladers und des Verbrennungsmotors eines solchen Fahrzeugs
Véhicule équipé d'un turbocompresseur et procédé pour commander le turbocompresseur et le moteur à combustion interne d'un tel véhicule

(43) Date of publication of application: 04.05.2016
(73) Proprietor: Iveco France S.A., 69200 Vénissieux (FR)
(72) Inventor: Gendre, Guy Pierre, 69003 Lyon (FR); Tognacca, Sebastian, 69200 Venissieux (FR)
(74) Representative: Franzolin, Luigi

(56) References cited:
- DE-A1-102009 053 490
- US-A1- 2006 263 203
- US-A1- 2011 036 089
- US-A1- 2013 269 342

## Description

### TECHNICAL FIELD OF THE INVENTION

This invention relates to a vehicle including, amongst others, an internal combustion engine, a turbine wheel and a compressor wheel mounted on a rotating shaft and forming together a turbo-compressor. Such a vehicle can, for instance, be a bus or any other vehicle for transporting passengers or goods. This invention also relates to a method for controlling the turbo-compressor and the internal combustion engine of such a vehicle.

US2011036089 discloses a vehicle comprising a turbo-compressor according to the preamble of claim 1.

### BACKGROUND OF THE INVENTION

In the field of vehicles for transporting passengers, such as buses, it is known to use an internal combustion engine and a compressor which provides the internal combustion engine with air under pressure. Such a compressor can be driven via a turbine which has a wheel installed in an exhaust line of the internal combustion engine. Such a compressor is said to be a turbo-compressor.

Such a turbo-compressor is efficient to provide the internal combustion engine with air under pressure under steady or quasi-steady conditions. However, in case the bus has to stop and accelerate often because of the traffic conditions, e.g. in a city center, the power available on the turbine side of the turbo-compressor is temporally offset from the power needed on the compressor side. For instance, when the bus needs to accelerate, the compressor wheel of the turbo-compressor should be driven at its highest possible rotation speed, in order to provide a maximum flow of compressed air to the internal combustion engine. If, at that moment, the rotation speed of the internal combustion engine is low, the exhaust gases have a low flow rate, which does not transfer a high kinetic energy to the turbine wheel. On the contrary, when the vehicle is decelerating, the driver does not request torque to be applied to the vehicle drive line. Thus, no high compressed air flow rate needs to be provided to the internal combustion engine, whereas the exhaust gases might come out of the internal combustion engine with a high flow rate. In such a case, a portion of these flow gases must be directed to a by-pass and their kinetic energy is lost. In other words, the dynamics of a turbo-compressor is not always in phase with the driver torque request and/or the vehicle dynamics.

This situation is all the more critical than, in modern buses, the rotation speed of the internal combustion engine is kept most of the time at a low idle speed, e.g. below 800 rpm. Under such circumstances, the utilization range of the turbine of a turbo-compressor is narrowed and the offset mentioned here-above between the turbine side and the compressor side is more critical.

Such problems also occur with other types of automotive vehicles, in particular trucks and passengers cars.

In order to solve this problem, one could consider mounting an electric motor on a shaft which connects the turbine wheel and the compressor wheel of the turbo-compressor. Such a motor should, as the wheels, rotate at very high speeds, in the range of 100,000 rpm or more, which, in practice, requires highly sophisticated motors. Such motors are expensive and relatively bulky. Moreover, in case such a motor would be mounted on a shaft linking the turbine wheel and compressor wheel, it would be subjected, on the one side, to the low temperature of the incoming air and, on the other side, to the high temperature of the exhaust gases. This would induce high thermal stresses on the motor and its internal magnetic flux would be disturbed, thus preventing it from reaching high rotation speeds.

### SUMMARY OF THE INVENTION

This invention aims at improving the synchronization between the turbine side and the compressor side of a turbo-compressor type device, so that power is available on the compressor side when needed, without having to use a complicated and expensive electric motor and to operate it in severe speed and thermal conditions.

To this end, the invention concerns a vehicle including an internal combustion engine, a turbine wheel installed in an exhaust line of the internal combustion engine and a compressor wheel installed in an air feeding line of the internal combustion engine. According to the invention, the turbine wheel is mounted on a first rotating shaft and the compressor wheel is mounted on a second rotating shaft, whereas this vehicle also includes an electric motor-generator coupled to the first rotating shaft via a first epicyclic gear train and to the second rotating shaft via a second epicyclic gear train.

Thanks to the invention, the electric motor-generator can be used to recover electric power from the rotation resulting from the transfer of kinetic energy between the exhaust gases and the turbine wheel. This motor-generator can also be used to accelerate the compressor wheel when needed. Owing to the use of two epicyclic gear trains, the rotation speed of the motor-generator can be much less than the rotation speed of the turbine wheel, on the one hand, and of the compressor wheel, on the other hand.

According to the invention the housing accommodating said first and second rotating shafts and the motor-generator is divided by several walls into several spaces which include at least a first compartment for the first epicyclic gear train, a second compartment for the second epicyclic gear train and a third compartment for the motor-generator.

According to further advantageous but not compulsory aspects of the invention, such a vehicle might incorporate one or several of the following features, taken in any admissible combination:
- The electric-motor-generator is coupled to the satellite carrier of each epicyclic gear train.
- The first rotating shaft is coupled to the sun gear of the first epicyclic gear train and the second rotating shaft is coupled to the sun gear of the second epicyclic gear train.
- The first and second rotating shafts and the motor-generator are located in a common housing.
- The housing defines the crown of each epicyclic gear train.
- The third compartment is located, along an axis parallel to the first rotating shaft, between the first and second compartments.
- The housing defines a first volume opened towards the turbine wheel and a second volume opened towards the compressor wheel, whereas the first volume is separated from the first compartment by a wall and the second volume is separated from the second compartment by another wall.
- The three compartments are located, along an axis parallel to the first rotating shaft, between the first and second volumes.
- The first and second rotating shafts are respectively centered and rotating around a first central axis and a second central axis, whereas the first and second central axes are superimposed and the first and second rotating shafts extend on either sides of the motor-generator.
- The vehicle includes electric power storing means and means to transfer electric power from these storage means to the motor-generator when it works as a motor and means to transfer electric power from the motor-generator to the storage means when the motor-generator works as a generator.

Moreover, this invention concerns a method for controlling a turbo-compressor and the internal combustion engine of a vehicle as mentioned here-above, this method including at least three operating modes where:
- in a first operating mode, the first and second rotating shafts rotate only under the action of exhaust gases of the internal combustion engine and the motor-generator is not used, neither as a motor, nor as a generator,
in a second operating mode, the motor-generator works as a motor and applies, to the rotating shafts and via the epicyclic gear trains, an acceleration torque and an internal combustion engine, a turbine wheel installed in an exhaust line of the internal combustion engine and a compressor wheel installed in an air feeding line of the internal combustion engine. According to the invention, the turbine wheel is mounted on a first rotating shaft and the compressor wheel is mounted on a second rotating shaft, whereas this vehicle also includes an electric motor-generator coupled to the first rotating shaft via a first epicyclic gear train and to the second rotating shaft via a second epicyclic gear train.

Thanks to the invention, the electric motor-generator can be used to recover electric power from the rotation resulting from the transfer of kinetic energy between the exhaust gases and the turbine wheel. This motor-generator can also be used to accelerate the compressor wheel when needed. Owing to the use of two epicyclic gear trains, the rotation speed of the motor-generator can be much less than the rotation speed of the turbine wheel, on the one hand, and of the compressor wheel, on the other hand.

According to further advantageous but not compulsory aspects of the invention, such a vehicle might incorporate one or several of the following features, taken in any admissible combination:
- The electric-motor-generator is coupled to the satellite carrier of each epicyclic gear train.
- The first rotating shaft is coupled to the sun gear of the first epicyclic gear train and the second rotating shaft is coupled to the sun gear of the second epicyclic gear train.
- The first and second rotating shafts and the motor-generator are located in a common housing.
- The housing defines the crown of each epicyclic gear train.
- The housing is divided by several walls into several spaces which include at least a first compartment for the first epicyclic gear train, a second compartment for the second epicyclic gear train and a third compartment for the motor-generator.
- The third compartment is located, along an axis parallel to the first rotating shaft, between the first and second compartments.
- The housing defines a first volume opened towards the turbine wheel and a second volume opened towards the compressor wheel, whereas the first volume is separated from the first compartment by a wall and the second volume is separated from the second compartment by another wall.
- The three compartments are located, along an axis parallel to the first rotating shaft, between the first and second volumes.
- The first and second rotating shafts are respectively centered and rotating around a first central axis and a second central axis, whereas the first and second central axes are superimposed and the first and second rotating shafts extend on either sides of the motor-generator.
- The vehicle includes electric power storing means and means to transfer electric power from these storage means to the motor-generator when it works as a motor and means to transfer electric power from the motor-generator to the storage means when the motor-generator works as a generator.

Moreover, this invention concerns a method for controlling a turbo-compressor and the internal combustion engine of a vehicle as mentioned here-above, this method including at least three operating modes where:
- in a first operating mode, the first and second rotating shafts rotate only under the action of exhaust gases of the internal combustion engine and the motor-generator is not used, neither as a motor, nor as a generator,
- in a second operating mode, the motor-generator works as a motor and applies, to the rotating shafts and via the epicyclic gear trains, an acceleration torque and
- in a third operating mode, the motor-generator works as a generator and applies, to the rotating shafts and via the epicyclic gear trains, a braking torque.

According to further aspects of this method, which are also advantageous but not compulsory, this method might incorporate one or several of the following features taken in any admissible combination:
- in the second operating mode, electric power is supplied to the motor-generator from the electric power storing means, whereas in the third operating mode, electric power is supplied by the motor-generator to the electric power storage means,
- the method includes at least a fourth operating mode where no fuel is injected in the internal combustion engine, the motor-generator works as a motor to drive the second rotating shaft in rotation, so that the compressor provides the internal combustion engine with air under pressure and the air under pressure provided by the compressor wheel is injected into the cylinders of the internal combustion engine to move their respective pistons in translation,
- a selection between the first, second and third operating modes of the method is made automatically, depending on the internal combustion engine speed and the torque requested by the driver.

### BRIEF DESCRIPTION OF THE DRAWINGS

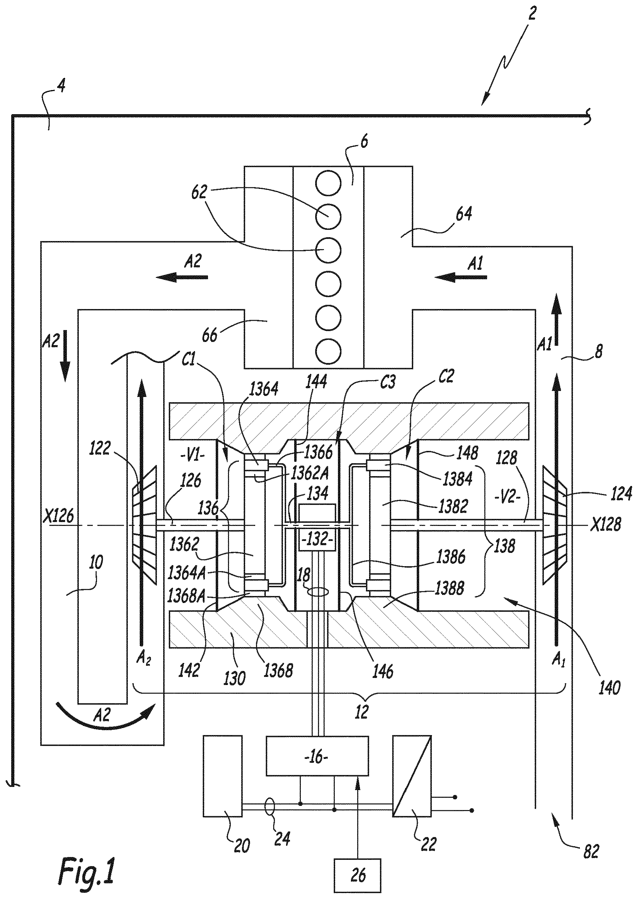

The invention will be better understood on the basis of the following description, which is given in correspondence with the annexed figures and as an illustrative example, without restricting the object of the invention. The annexed figure 1 is a schematic representation of some parts of a motor vehicle incorporating the invention.

### DETAILED DESCRIPTION OF SOME EMBODIMENTS

The bus 2 partly represented on figure 1 has an engine compartment 4 where an internal combustion engine 6 is installed.

Internal combustion engine 6 includes six cylinders 62 which are provided with fuel under high pressure, in the range of 1,000 bars or more, and with air under pressure, in the range of 1,2 to several bars, as shown by arrows A1. Internal combustion engine 6 is provided with an air inlet manifold 64 and an exhaust gases outlet manifold 66. An air feeding line 8 is connected to inlet manifold 64, on its upstream side and conveys air from an inlet opening 82 to this manifold 64. An exhaust line 10 is connected downstream of outlet manifold 66 and conveys exhaust gases to a non-representative outlet opening.

Alternatively, engine 6 can have a number of cylinders 62 different from 6.

A turbo-compressor 12 is also mounted in engine compartment 4 and includes a turbine wheel 122 installed within exhaust line 10 and a compressor wheel 124 installed within air feeding line 8.

Turbine wheel 122 is mounted on a first rotating shaft 126 which is centered and rotates around a first axis X126. Compressor wheel 124 is mounted on a second rotating shaft 128 which is centered and rotates around a second axis X128. Actually, axes X126 and X128 are superimposed and wheels 122 and 124 are located on either side of a housing 130 which also belongs to turbo-compressor 12.

An electric motor-generator 132 is mounted within housing 130, actually between wheels 122 and 124 along axes X126 and X128. 134 denotes a central shaft of motor-generator 132 which is its output shaft when this motor-generator works as a motor and its input shaft when it works as a generator.

A first epicyclic gear train 136 is used for coupling first shaft 126 to shaft 134. Epicyclic gear train 136 includes a sun gear 1362 which is coupled to, that is fast in rotation with, first shaft 126. Epicyclic gear train 136 also includes several satellites 1364 each provided with a toothing 1364A meshing with an outer toothing 1362A of sun gear 1362. A satellite carrier 1366 supports all satellites 1364 and is coupled to, that is fast in rotation with, shaft 134. A crown 1368 of epicyclic gear train 136 is formed by a toothed portion of housing 130 which is aligned with sun gear 1362 and satellites 1364 along axis X126. A toothing 1368A of crown 1368 meshes with the toothings of satellites 1364.

On the other hand, a second epicyclic gear train 138 is used to couple together shafts 128 and 134. More precisely, epicyclic gear train 138 includes a sun gear 1382, several satellites 1384, a satellite carrier 1386 and a crown 1388 similar to the ones of the first epicyclic gear train 136. Sun gear 1382 is coupled to second shaft 128, whereas satellite carrier 1386 is coupled to shaft 134.

Actually, first and second epicyclic gear trains 136 and 138 can be identical, in particular with the same reduction ratio. However, this is not compulsory.

The fact that rotating shafts 126 and 128 are coupled to sun gears 1362 and 1382, whereas motor-generator shaft 134 is coupled to satellite carriers 1366 and 1386 is particularly advantageous in terms of rotational speeds repartition since it allows having shaft 134 rotating at a lower speed than shafts 126 and 128. However, other connection modes of epicyclic gear trains 136 and 138 to their environment can be considered.

Housing 130 has a central bore 140 with a circular cross-section centered on axes X126 and X128. This central bore 140 extends from the vicinity of turbine wheel 122 up to the vicinity of compressor wheel 124. This central bore is divided by four walls 142, 144, 146 and 148 into five volumes which can be at different temperatures, in particular since wall 142 can be made of a thermally insulating material, such as ceramic composites or other.

A first compartment C1 is defined between walls 142 and 144 and accommodates first epicyclic gear train 136. Walls 142 and 144 are respectively provided with a central opening for the passage of shafts 126 and 134.

A second compartment C2 is defined between walls 146 and 148 and accommodates second epicyclic gear train 138. Walls 146 and 148 are respectively provided with a central opening for the passage of shafts 134 and 128.

A third compartment C3 is defined between walls 144 and 146 and accommodates motor-generator 132.

A first volume V1 extends radially inside housing 130, on a side of wall 142 opposite to compartment C1. This first volume opens in the direction of turbine wheel 122.

A second volume V2 extends radially inside housing 130, on a side of wall 148 which is opposite to compartment C2. This second volume V2 opens in the direction of compressor wheel 124.

Thus, along axis X126 or X128, compartments C1 to C3 and volumes V₁ and V₂ are juxtaposed in the following order: volume V₁, compartment C1, compartment C3, compartment C2, volume V₂.

Due to the insulating properties of wall 142, volumes V₁ and V₂ and compartments C1 to C3 can be at different temperatures. In particular, air in volume V₁ can be relatively hot, depending on the temperature of the exhaust gases, whereas air in volume V2 can be roughly at the ambient temperature. Thanks to walls 142 and 144, motor-generator 132 is protected from the high temperatures in volume V1, which allows motor-generator 132 to work in conditions where the magnetic flux within this electric device is not disturbed.

Motor-generator 132 is connected to an inverter/controller 16 via an electric line 18 made of three electric conductors. Actually, motor-generator 132 is a three phase electric device and another conductor, which connects motor-generator to the electric mass of bus 2, is not represented on figure 1 . Alternatively, motor-generator 132 can be a one phase electric device.

Inverter/controller 16 is connected to an electric power storage battery 20 and to a DC/DC converter 22 via an electric line 24 made of two electric conductors. Electric current in line 24 is direct, whereas electric current in line 18 is alternating. Converter 22 is fed with electric current coming from the general electric network of bus 2, under a tension of 24 V or 48 V. Actually, converter 22 is optional and, depending on the tension in electric line 24, it can be omitted.

Walls 144 to 148 are thermally insulating.

According to a non represented embodiment of the invention, an oil bath can be used to cool motor-generator 132 and/or epicyclic gear trains 136 and 138.

Thanks to the structure represented on figure 1, several operating modes of internal combustion engine 6 and turbo-compressor 12 can be considered.

In a first operating mode, wheels 122 and 124 rotate under the sole action of the exhaust gases in exhaust line 10 and motor-generator 132 is not used, neither as a motor nor as a generator. Since shaft 134 is coupled to the satellite carriers 1366 and 1386, the rotation speed of shaft 134 is smaller than the rotation speed of shafts 126 and 128, the difference in these rotation speeds corresponding to the reduction ratio of each epicyclic gear train. In this operating mode, turbo-compressor 12 works as if no motor-generator was included.

A second operating mode of turbo-generator 12 is used when the speed of compressor wheel 124 needs to be increased. In this second operating mode, motor-generator 132 is fed with electric current from battery 20, via converter 16 and electric lines 18 and 24, so that it works as a motor and its output shaft 134 applies an accelerating torque to satellite carrier 1386. This torque is transferred to sun gear 1382, thus to rotating shaft 128 and compressor wheel 124. This allows reaching a high rotation speed of compressor wheel 124 in a short period of time, even if the power available from the kinetic energy transferred to turbine wheel 122 is not very high, which can occur when engine 6 is running at a low speed, as mentioned here-above. In other words, in the second operating mode, the angular acceleration which can be expressed by dV/dt, where V is the angular velocity of compressor wheel 124, is positive, so that a maximum rotation speed or velocity Vₘₐₓ can be reached quickly. Thus, the response time of turbo-compressor 12 is improved as compared to a standard device. In this second operating mode, the acceleration torque delivered by motor-generator 132 is also applied to rotating shaft 126 and turbine wheel 122 via epicyclic gear train 136.

A third operating mode of turbo-compressor 12 is used where motor-generator 132 is switched to a generator mode, so that the rotation speed of turbine wheel 122, which is transferred to satellite carrier 1366 via shaft 126, sun gear 1362 and satellites 1364, is used to generate an electric current which is sent, via electric lines 18 and 24 and inverter 16, towards battery 20. In other words, in this third operating mode, one brakes the rotational movement of turbine wheels 122 and this induces that some electric power is recovered and stored in battery 20. This third operating mode is useful when compressor wheel 124 does not have to rotate at high speed, since no large quantity of air under pressure is to be fed to collector manifold 64. In the third operating mode, the braking torque delivered by motor-generator 132 is also applied to rotating shaft 128 and compressor wheel 124, via epicyclic train 138.

Thanks to this third operating mode, it is possible not to divert a portion of the exhaust gases which circulate in exhaust line 10 as shown b arrows A2 when a low rotation speed is needed for compressor wheel 124. In other words, this third operating mode avoids using a by-pass and allows always directing all exhaust gases towards turbine wheel 122, so that a maximum energy is recovered via motor-generator 132 working as a generator, without unduly accelerating compressor wheel 124.

Another fourth operating mode of engine 6 and turbo-compressor 12 is available when bus 2 comes to a point where engine 6 should be turned off in order to save fuel. In this other operating mode, no fuel is injected in the cylinders 62, so that the fuel consumption is null. In this fourth operating mode, electric power is provided to motor-generator 132, from battery 20 and via inverter 16 and electric lines 18 and 24, so that compressor wheel 124 rotates, to the point that it generates a flow of air under pressure in air feeding line 8, as shown by arrows A1. This air is injected into the cylinders 62, which move their respective pistons in a back and forth translational movement. In other words, air under pressure is used to keep internal combustion engine 6 running, even if no fuel is injected in the cylinders 62. This allows keeping internal combustion engine in movement during a short stop of bus 2, e.g. in front of a red traffic light or in a traffic jam. Under such circumstances, engine 6 is still running when it is necessary to start it again and it is sufficient to inject some fuel in the cylinder 62 to make engine 6 run in the normal way, without having to use a dedicated starter device. This operating mode of turbo-compressor 12 avoids that the inertia of engine 6 forms a limitation to the response time of bus 2 when it is necessary to start its engine.

With this respect, it is also possible to use turbo-compressor 12 in the fourth operating mode mentioned here-above in order to start engine 6 by injecting air into cylinders 62. The difference with respect to the previously mentioned case in one starts from a configuration where engine 6 is at rest in this case, whereas one starts from a configuration when engine 6 is still running in the previous case.

Selection of the operating mode of turbo-compressor 12 between its first, second, and third operating modes is performed automatically by an electronic control unit or ECU 26 which pilots inverter/controller 16 on the basis of the rotation speed of wheels 122 and 124 of engine 6 and on the basis of the torque requested by the driver as output of the engine 6, e.g. via the accelerator pedal. ECU 26 can also be used to automatically implement the fourth operating stage when it is sensed that bus 2 is stopped or when engine 6 needs to be started.

The invention is represented on figure 1 in case it is used on board a bus 2. It can also be used on another type of vehicle, e.g. a car or a truck.

The invention is represented on figure 1 in case bus 2 includes only an internal combustion engine. However, it is also possible to use the invention with a hybrid vehicle, in particular a so-called micro-hybrid vehicle.

The reduction ratios of epicyclic trains 136 and 138 can be different, which allows wheels 122 and 124 rotating at different speeds, even if they remain proportional to each other.

The invention can be implemented on a new vehicle and also on existing vehicles, provided that they are retrofitted accordingly.

The embodiments and alternative embodiments considered here-above can be combined in order to generate new embodiments of the invention.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

## Claims

1. A vehicle (2) including:
- an internal combustion engine (6);
- a turbine wheel (122) installed in an exhaust line (10) of the internal combustion engine; and
- a compressor wheel (124) installed in an air feeding line (8) of the internal combustion engine,
- Wherein the turbine wheel is mounted on a first rotating shaft (126) and the compressor wheel is mounted on a second rotating shaft (12 the vehicle also includes an electric motor-generator (132) coupled to the first rotating shaft (126) via a first epicyclic gear train (136) and to the second rotating shaft (128) via a second epicyclic train (138);
wherein the first and second rotating shafts (126, 128) and the motor-generator (132) are located in a common housing (130) and
**characterized in** being divided by several thermally insulating walls (142-148) into several spaces which include at least:
- a first compartment (C1) accommodating the first epicyclic gear train (136),
- a second compartment (C2) accommodating the second epicyclic gear train (138),
- a third compartment (C3) accommodating the motor-generator (132).

2. A vehicle according to claim 1, **characterized in that** the electric-motor-generator (132) is coupled to the satellite carrier (1366, 1386) of each epicyclic gear train (136, 138).

3. A vehicle according to any preceding claim, **characterized in that** the first rotating shaft (126) is coupled to the sun gear (1362) of the first epicyclic gear train (136) and the second rotating shaft (128) is coupled to the sun gear (1382) of the second epicyclic gear train (138).

4. A vehicle according to claim 1, **characterized in that** the housing (130) defines the crown (1368, 1388) of each epicyclic gear train (136, 138).

5. A vehicle according to claim 1, **characterized in that** the third compartment (C3) is located, along an axis (X126) parallel to the first rotating shaft (126), between the first and second compartments (C1, C2).

6. A vehicle according to one of claims 1 and 5, **characterized in that** the housing (130) defines:
- a first volume (V1) opened towards the turbine wheel (126),
- a second volume (V2) opened towards the compressor wheel (124)
**in that** the first volume (V1) is separated from the first compartment (C1) by a wall (142) and **in that** the second volume (V2) is separated from the second compartment (C2) by another wall (148).

7. A vehicle according to claim 6, **characterized in that** the three compartments (C1, C2, C3) are located, along an axis (X126) parallel to the first rotating shaft (126), between the first and second volumes (V1, V2).

8. A vehicle according to any preceding claim, **characterized in that** the first and second rotating shafts (126, 128) are respectively centered and rotating around a first central axis (X126) and a second central axis (X128), **in that** the first and second central axes are superimposed and **in that** the first and second rotating shafts extend on either sides of the motor-generator (132).

9. A vehicle according to claim 8, **characterized in that** it includes electric power storing means (20) and means (16, 18, 24) to transfer electric power from these storage means to the motor-generator (132) when it works as a motor and means to transfer electric power from the motor-generator to the storage means when the motor-generator works as a generator.

10. A method for controlling a turbo-compressor (12) and the internal combustion engine (6) of a vehicle (2) according to preceding claim 8 or 9, **characterized in that** this method includes at least three operating modes where:
- in a first operating mode, the first and second rotating shafts (126, 128) rotate only under the action of exhaust gases of the internal combustion engine and the motor-generator (132) is not used, neither as a motor, nor as a generator,
- in a second operating mode, the motor-generator works as a motor and applies, to the rotating shafts (126, 128) and via the epicyclic gear trains (136, 138), an acceleration torque, and
- in a third operating mode, the motor-generator works as a generator and applies, to the rotating shafts (126, 128) and via the epicyclic gear trains (136, 138), a braking torque.

11. A method according to claim 10 implemented in a vehicle according to claim 9, **characterized in that**:
- in the second operating mode, electric power is supplied to the motor-generator (132) from the electric power storing means (20),
- in the third operating mode, electric power is supplied by the motor-generator to the electric power storage means.

12. A method according to one of claims 10 and 11, **characterized in that** it includes at least a fourth operating mode where no fuel is injected in the internal combustion engine (6), the motor-generator (132) works as a motor to drive the second rotating shaft (128) in rotation so that the compressor wheel (124) provides the internal combustion engine with air under pressure and the air under pressure provided by the compressor wheel is injected into the cylinders (62) of the internal combustion engine to move their respective pistons in translation.

13. A method according to any one of claims 10 to 12, **characterized in that** a selection between the first, second and third operating modes is made automatically (26), depending on the internal combustion engine (6) speed and on the torque requested by the driver.

## Patentansprüche

1. Fahrzeug (2), umfassend:
- einen inneren Verbrennungsmotor (6);
- ein Turbinenrad (122), das in einer Abgasleitung (10) des inneren Verbrennungsmotors installiert ist; und
- ein Kompressorrad (124), dass in einer Luftzuleitung (8) des inneren Verbrennungsmotors installiert ist,
- wobei das Turbinenrad auf einer ersten rotierenden Welle (126) montiert ist und das Kompressorrad auf einer zweiten rotierenden Welle (12) montiert ist, und das Fahrzeug ferner einen Elektromotor-Generator (132) umfasst, der mit der ersten rotierenden Welle (126) über einen ersten epizyklischen Getriebezug (136) und mit der zweiten rotierenden Welle (128) über einen zweiten epizyklischen Getriebezug (138) gekoppelt ist;
- wobei die ersten und zweiten rotierenden Wellen (126,128) und der Motor-Generator (132) in einem gemeinsamen Gehäuse (130) angeordnet sind,
**dadurch gekennzeichnet, dass** es durch mehrere thermisch isolierende Wände (142-148) in mehrere Räume unterteilt ist, welche zumindest umfassen:
- ein erstes Abteil (C1), welches den ersten epizyklischen Getriebezug (136) aufnimmt,
- ein zweites Abteil (C2), welches den zweiten epizyklischen Getriebezug (138) aufnimmt,
- ein drittes Abteil (C3), das den Motor-Generator (132) aufnimmt.

2. Fahrzeug gemäß Anspruch 1, **dadurch gekennzeichnet, dass** der Elektromotor-Generator (132) mit dem Satellitenträger (1366,1386) des ersten epizyklischen Getriebezugs (136,138) gekoppelt ist.

3. Fahrzeug gemäß einem der vorhergehenden Ansprüche, **dadurch gekennzeichnet, dass** die erste rotierende Welle (126) mit dem Sonnenrad (1362) des ersten epizyklischen Getriebezugs (136) gekoppelt ist und die zweite rotierende Welle (128) mit dem Sonnenrad (1382) des zweiten epizyklischen Getriebezugs (138) gekoppelt ist.

4. Fahrzeug gemäß Anspruch 1, **dadurch gekennzeichnet, dass** das Gehäuse (130) die Krone (1368,1388) jedes epizyklischen Getriebezugs (136,138) festlegt.

5. Fahrzeug gemäß Anspruch 1, **dadurch gekennzeichnet, dass** das dritte Abteil (C3) entlang einer Achse (X126) parallel zu der ersten rotierenden Welle (126) zwischen den ersten und zweiten Abteilen (C1,C2,C3) angeordnet ist.

6. Fahrzeug gemäß einem der Ansprüche 1 und 5, **dadurch gekennzeichnet, dass** das Gehäuse (130) definiert:
- ein erstes Volumen (V1), das zum Turbinenrad (126) hin geöffnet ist,
- ein zweites Volumen (V2), das zum Kompressorrad (124) hin geöffnet ist,
wobei das erste Volumen (V1) von dem ersten Abteil (C1) durch eine Wand (142) getrennt ist und das zweite Volumen (V2) von dem zweiten Abteil (C2) durch eine weitere Wand (148) getrennt ist.

7. Fahrzeug gemäß Anspruch 6, **dadurch gekennzeichnet, dass** die drei Abteile (C1,C2,C3) entlang einer Achse (X126) parallel zu der ersten rotierenden Welle (126) zwischen den ersten und zweiten Volumina (V1,V2) angeordnet sind.

8. Fahrzeug gemäß einem der vorhergehenden Ansprüche, **dadurch gekennzeichnet, dass** die ersten und zweiten rotierenden Wellen (126,128) jeweils zentriert sind und um eine erste Zentralachse (X126) und eine zweite Zentralachse (X128) rotieren, wobei die erste und zweite Zentralachse übereinanderliegen und die ersten und zweiten rotierenden Wellen sich auf beiden Seiten des Motor-Generators (132) erstrecken.

9. Fahrzeug gemäß Anspruch 8, **dadurch gekennzeichnet, dass** es elektrische Energiespeichermittel (20) und Mittel (16,18,24) zur Übertragung elektrischer Energie von diesen Speichermitteln zum Motor-Generator (132) umfasst, wenn dieser als ein Motor arbeitet, und Mittel zur Übertragung elektrischer Energie von dem Motor-Generator zu den Speichermitteln, wenn der Motor-Generator als ein Generator arbeitet.

10. Verfahren zur Steuerung eines Turbo-Kompressors (12) und des inneren Verbrennungsmotors (6) eines Fahrzeugs (2) gemäß einem der vorhergehenden Ansprüche 8 oder 9, **dadurch gekennzeichnet, dass** dieses Verfahren zumindest drei Betriebsarten umfasst, wobei
- in einer ersten Betriebsart die ersten und zweiten rotierenden Wellen (126,128) nur unter der Einwirkung von Abgasen des inneren Verbrennungsmotors rotieren und der Motor-Generator (132) weder als Motor noch als Generator verwendet wird,
- in einer zweiten Betriebsart der Motor-Generator als ein Motor arbeitet und auf die rotierenden Wellen (126,128) und über die epizyklischen Getriebezüge (136,138) ein Beschleunigungsdrehmoment ausübt, und
- in einer dritten Betriebsart der Motor-Generator als ein Generator arbeitet und auf die rotierenden Wellen (126,128) und über die epizyklischen Getriebezüge (136,138) ein Bremsdrehmoment ausübt.

11. Verfahren gemäß Anspruch 10, implementiert in ein Fahrzeug gemäß Anspruch 9, **dadurch gekennzeichnet, dass**
- in der zweiten Betriebsart elektrische Energie dem Motor-Generator (132) von den elektrischen Energiespeichermitteln (20) zugeführt wird,
- in der dritten Betriebsart elektrische Energie vom Motor-Generator zu den elektrischen Energiespeichermitteln zugeführt wird.

12. Verfahren gemäß einem der Ansprüche 10 und 11, **dadurch gekennzeichnet, dass** dieses zumindest eine vierte Betriebsart umfasst, in welcher kein Treibstoff in den inneren Verbrennungsmotor (6) eingeleitet wird, der Motor-Generator (132) als ein Motor zum Antrieb der zweiten rotierenden Welle (128) zur Drehung arbeitet, so dass das Kompressorrad (124) den inneren Verbrennungsmotor mit Luft unter Druck versorgt und die Luft unter Druck, die von dem Kompressorrad zugeleitet wird, in die Zylinder (62) des inneren Verbrennungsmotors zur Bewegung ihrer jeweiligen Kolben in Übertragung eingeleitet wird.

13. Verfahren gemäß einem der Ansprüche 10 bis 12, **dadurch gekennzeichnet, dass** eine Auswahl zwischen ersten, zweiten und dritten Betriebsarten automatisch (26) erfolgt, abhängig von der Geschwindigkeit des inneren Verbrennungsmotors (6) oder vom Drehmoment, das vom Fahrer abgerufen wird.

## Revendications

1. Véhicule (2) incluant :
- un moteur à combustion interne (6) ;
- une roue de turbine (122) qui est installée dans une conduite d'échappement (10) du moteur à combustion interne ; et
- une roue de compresseur (124) qui est installée dans une conduite d'alimentation en air (8) du moteur à combustion interne ; dans lequel :
la roue de turbine est montée sur un premier arbre tournant (126) et la roue de compresseur est montée sur un second arbre tournant (128), le véhicule incluant également un moteur-générateur électrique (132) qui est couplé au premier arbre tournant (126) via un premier train d'engrenages épicyclique (136) et au second arbre tournant (128) via un second train d'engrenages épicyclique (138) ; dans lequel :
les premier et second arbres tournants (126, 128) et le moteur-générateur électrique (132) sont placés dans un carter commun (130) ; et
**caractérisé en ce qu'**il est divisé au moyen de plusieurs parois thermiquement isolantes (142-148) en plusieurs espaces, lesquels espaces incluent au moins :
- un premier compartiment (C1) qui loge le premier train d'engrenages épicyclique (136) ;
- un deuxième compartiment (C2) qui loge le second train d'engrenages épicyclique (138) ; et
- un troisième compartiment (C3) qui loge le moteur-générateur (132).

2. Véhicule selon la revendication 1, **caractérisé en ce que** le moteur-générateur électrique (132) est couplé au porte-satellite (1366, 1386) de chaque train d'engrenages épicyclique (136, 138).

3. Véhicule selon l'une quelconque des revendications qui précèdent, **caractérisé en ce que** le premier arbre tournant (126) est couplé à l'engrenage solaire (1362) du premier train d'engrenages épicyclique (136) et le second arbre tournant (128) est couplé à l'engrenage solaire (1382) du second train d'engrenages épicyclique (138).

4. Véhicule selon la revendication 1, **caractérisé en ce que** le carter (130) définit la couronne (1368, 1388) de chaque train d'engrenages épicyclique (136, 138).

5. Véhicule selon la revendication 1, **caractérisé en ce que** le troisième compartiment (C3) est placé, le long d'un axe (X126) qui est parallèle au premier arbre tournant (126), entre les premier et deuxième compartiments (C1, C2).

6. Véhicule selon l'une quelconque des revendications 1 et 5, **caractérisé en ce que** le carter (130) définit :
- un premier volume (V1) qui est ouvert en direction de la roue de turbine (126) ;
- un second volume (V2) qui est ouvert en direction de la roue de compresseur (124) ;
**en ce que** le premier volume (V1) est séparé du premier compartiment (C1) par une paroi (142) et **en ce que** le second volume (V2) est séparé du deuxième compartiment (C2) par une autre paroi (148).

7. Véhicule selon la revendication 6, **caractérisé en ce que** les trois compartiments (C1, C2, C3) sont placés, le long d'un axe (X126) qui est parallèle au premier arbre tournant (126), entre les premier et second volumes (VI, V2).

8. Véhicule selon l'une quelconque des revendications qui précèdent, **caractérisé en ce que** les premier et second arbres tournants (126, 128) sont respectivement centrés et tournants autour d'un premier axe central (X126) et d'un second axe central (X128), **en ce que** les premier et second axes centraux sont superposés et **en ce que** les premier et second arbres tournants s'étendent sur l'un et l'autre côtés du moteur-générateur (132).

9. Véhicule selon la revendication 8, **caractérisé en ce qu'**il inclut des moyens de stockage de puissance électrique (20) et des moyens (16, 18, 24) pour transférer de la puissance électrique qui provient de ces moyens de stockage au moteur-générateur (132) lorsqu'il fonctionne en tant que moteur et aux moyens pour transférer de la puissance électrique depuis le moteur-générateur jusqu'aux moyens de stockage lorsque le moteur-générateur fonctionne en tant que générateur.

10. Procédé pour commander un turbocompresseur (12) et le moteur à combustion interne (6) d'un véhicule (2) selon la revendication qui précède 8 ou 9, **caractérisé en ce que** ce procédé inclut au moins trois modes de fonctionnement selon lesquels :
- dans un premier mode de fonctionnement, les premier et second arbres tournants (126, 128) sont entraînés en rotation seulement sous l'action de gaz d'échappement du moteur à combustion interne et le moteur-générateur (132) n'est pas utilisé, ni en tant que moteur, ni en tant que générateur ;
- dans un deuxième mode de fonctionnement, le moteur-générateur fonctionne en tant que moteur et il applique, sur les arbres tournants (126, 128) et via les trains d'engrenages épicycliques (136, 138), un couple d'accélération ; et
- dans un troisième mode de fonctionnement, le moteur-générateur fonctionne en tant que générateur et il applique, sur les arbres tournants (126, 128) et via les trains d'engrenages épicycliques (136, 138), un couple de freinage.

11. Procédé selon la revendication 10, mis en oeuvre dans un véhicule selon la revendication 9, **caractérisé en ce que** :
- dans le deuxième mode de fonctionnement, de la puissance électrique est fournie au moteur-générateur (132) depuis les moyens de stockage de puissance électrique (20) ; et
- dans le troisième mode de fonctionnement, de la puissance électrique est fournie par le moteur-générateur aux moyens de stockage de puissance électrique.

12. Procédé selon l'une quelconque des revendications 10 et 11, **caractérisé en ce qu'**il inclut au moins un quatrième mode de fonctionnement selon lequel du carburant n'est pas injecté dans le moteur à combustion interne (6), le moteur-générateur (132) fonctionne en tant que moteur pour entraîner le second arbre tournant (128) en rotation de telle sorte que la roue de compresseur (124) fournisse au moteur à combustion interne de l'air sous pression et que l'air sous pression qui est fourni par la roue de compresseur soit injecté à l'intérieur des cylindres (62) du moteur à combustion interne de manière à déplacer en translation leurs pistons respectifs.

13. Procédé selon l'une quelconque des revendications 10 à 12, **caractérisé en ce qu'**une sélection entre les premier, deuxième et troisième modes de fonctionnement est réalisée de manière automatique (26), en fonction de la vitesse du moteur à combustion interne (6) et du couple qui est demandé par le conducteur.
